# EUROPÄISCHE PATENTSCHRIFT

(11) **EP 0 625 412 B1**
(45) Veröffentlichungstag und Bekanntmachung des Hinweises auf die Patenterteilung: **25.09.1996**
(21) Anmeldenummer: 94107252.2
(22) Anmeldetag: 10.05.1994
(51) Int. Cl.: B27L 5/06, B23Q 1/26, B23Q 11/10

(54) **Vorrichtung zum schneidenden Abtrennen dünner Bretter von einem Kantholz**
Apparatus for slicing thin planks from squared timber
Dispositif pour trancher du bois équarri en planches

(30) Priorität: 18.05.1993 DE 4316589
(43) Veröffentlichungstag der Anmeldung: 23.11.1994
(73) Patentinhaber: Gebrüder Linck, Maschinenfabrik "Gatterlinck" GmbH & Co.KG, D-77704 Oberkirch (DE)
(72) Erfinder:
(74) Vertreter: Fuchs, Luderschmidt & Partner Patentanwälte

(56) Entgegenhaltungen:
- DE-U- 9 116 211
- US-A- 3 006 391
- US-A- 4 083 278

## Beschreibung

Die Erfindung betrifft eine Vorrichtung zum schneidenden Abtrennen dünner Bretter von einem Kantholz nach dem Oberbegriff des Patentanspruches 1.

Bei derartigen Vorrichtungen wird das Kantholz im allgemeinen auf einem Zuführtisch in seiner Längsrichtung gegen eine etwas höher als der Zuführtisch gelegene stationäre Messerschneide gedrückt. Dabei ist das Messer im allgemeinen derart eingebaut, daß sich die Messerschräge, an der ein abgetrenntes Brett abgeleitet wird, an der Unterseite des Messers befindet und das Messer an seiner Oberseite eine horizontale Messerfläche aufweist, an die sich ein Messerstück anschließt, auf dem das Restkantholz nach dem Abtrennen eines Brettes weiter unterstützt geführt ist. Messertisch und Zuführtisch bilden zusammen den Auflagetisch der Maschine, wobei Messertisch mit Messer und Zuführtisch relativ zueinander in ihrer Höhe verstellbar sind, um die Dicke eines abzutrennenden Brettes einstellen zu können.

Das Kantholz, von dem ein Brett abgetrennt werden soll, wird bei diesem Vorgang einerseits mittels Vorschubmitteln gegen die Messerschneide vorgeschoben und andererseits durch Andruckmittel ständig gegen den Auflagetisch gedrückt, um konstante Schneidverhältnisse zu gewährleisten. Die Andruckmittel bestehen bei praktischen Ausführungsformen aus einer Walzenfolge, deren Walzen einzeln mittels hydraulischer Zylinder oder ähnlicher Kraftaufbringungsmittel gegen das Kantholz andrückbar sind. Der Andruck erfolgt jedoch nicht direkt, sondern mittels eines umlaufenden Gummigurtes, von dem die Andruckwalzenserie umschlungen ist. Der Vorschub des Kantholzes gegen das Messer wird bevorzugt durch getrennte Vorschubwalzenpaare bewirkt, die sich vornehmlich vor und hinter den Andruckmitteln befinden, in besonderen Ausführungsformen aber auch teilweise im Andruckwalzenbereich vorgesehen sein können, wobei solche im Messerbereich angeordneten Andruckwalzen sich auch innerhalb des umlaufenden Gummigurtes befinden können.

Insbesondere bei der Verarbeitung kurzer Kanthölzer, die sich beim Vorschieben gegen das Messer nicht ständig in Eingriff mit außerhalb des Messerbereiches befindlichen Vorschubwalzenpaaren befinden können, wird notwendigerweise ein Teil der Vorschubkraft auf das Kantholz auch durch den, im allgemeinen angetriebenen umlaufenden Gummigurt übertragen, insbesondere dann, wenn dieser zusätzlich auch noch Vorschubwalzen enthält.

Es müssen also im ungünstigsten Fall die Vorschubkräfte für das Kantholz durch den Gummigurt auf dieses übertragen werden, wobei die Vorschubkraft allein durch den Reibungswiderstand zwischen Gummigurt und Kantholz bestimmt ist. Andererseits muß zusätzlich zu der Kraft, mit der das Kantholz gegen das Messer vorgeschoben wird, auch noch der Reibungswiderstand zwischen Kantholz und Auflagetisch überwunden werden, gegen den das Kantholz angedrückt wird. Hieraus ergibt sich, daß die Reibungskraft zwischen Gummigurt und Kantholz relativ hoch sein muß, um im ungünstigsten Falle allein einen Vorschub des Kantholzes gegen das Messer zu bewirken.

Nun ist es üblich, zum Verbessern der Schnittqualität Kanthölzer vor dem Schneiden in einem Heißwasserbad zu erwärmen. Dadurch werden die Kanthölzer mit Wasser benetzt, wobei der Benetzungsgrad, je nachdem wie die Kanthölzer nach Verlassen des Wasserbades behandelt werden, auch an einzelnen Seiten unterschiedlich sein kann. So kann es vorkommen, daß durch zu starke Benetzung eines Kantholzes an seiner Oberseite der Reibungswert zwischen Gummigurt und Kantholz stark reduziert wird, so daß allein für den Vorschub überdurchschnittlich hohe Kräfte aufgebracht werden müssen, die die optimale Andruckkraft zum Aufrechterhalten guter Schneidbedingungen überschreiten. Dieses Mißverhältnis kann noch dadurch verstärkt werden, daß sich auf dem Auflagetisch, insbesondere aber auch auf der Messerfläche, Ablagerungen bilden, die die Gleitfähigkeit des Tisches herabsetzen und ihrerseits zur Erhöhung der erforderlichen Vorschubkraft beitragen.

Der Erfindung liegt die Aufgabe zugrunde, bei einer Schneidmaschine mit einem Auflagetisch Verhältnisse zu schaffen, mit denen die vorstehend erläuterten nachteiligen Einflüsse möglichst beseitigt und die insgesamt erforderliche Vorschubkraft reduziert werden kann, was neben dem Vermeiden von Betriebsstörungen insgesamt auch zu einer stets erwünschten Energieeinsparung führt.

Diese Aufgabe wird erfindungsgemäß dadurch gelöst, daß der Auflagetisch und/oder das Messer ihrerseits gewollt mit einer Flüssigkeit beaufschlagt werden, die die Gleiteigenschaften dieser Auflageflächen verbessert.

Es sind Maschinenausführungen bekannt, bei denen für die Auflage des Kantholzes ein Rollenbett verwendet wird, das bekanntermaßen im Vergleich zu einer Gleitfläche einen geringeren Reibungswiderstand hat. Aus schneidtechnischen Gründen sind Rollen, die keine kontinuierliche Auflagefläche bilden können, insbesondere beim Schneiden kurzer Hölzer nachteilig.

Sollte ein Mißverhältnis in den Reibungseigenschaften der betroffenen Teile dadurch entstehen, daß ein Kantholz an seiner mit dem Gummigurt in Kontakt befindlichen Oberseite vom Heißwasserbad her stark benetzt, auf seiner Unterseite auf Transportmitteln aber schon abgetrocknet ist, so kann durch die erfindunsgemäße Maßnahme dieses Mißverhältnis zumindest ausgeglichen werden, indem auch die Unterseite zusätzlich gewollt benetzt und somit ihr Reibungswiderstand reduziert wird. Die Beaufschlagung der genannten Teile mit Flüssigkeit hat jedoch gleichzeitig die Wirkung, daß sich in Bildung befindende Ablagerungen auf den Gleitflächen im Entstehungsstadium bereits vermieden und zusammen mit der Flüssigkeit und dem Kantholz praktisch weggeschoben werden.

Die Beaufschlagung des Auflagetisches ist natürlich gerade dann wünschenswert, wenn sich ein Kantholz in Bearbeitung auf dem Tisch befindet. Eine bevorzugte Ausführungsform der Erfindung sieht daher vor, daß die Flüssigkeit von unten durch die Tischfläche zugeführt wird, um während der Bewegung eines Kantholzes über den Tisch eine Art Flüssigkeitsfilm unter das Kantholz zu bringen. Zu diesem Zweck sind in den Tischflächen eine Anzahl von Austrittskanälen für Flüssigkeit vorgesehen. Die erforderlichen Flüssigkeitsmengen sind verhältnismäßig gering. Die Regelung der Flüssigkeitsmenge kann nun beispielsweise derart erfolgen, daß die Flüssigkeitsaustrittskanäle mit einer mengenregelbaren Pumpe verbunden sind. Hierfür sind beispielsweise handelsübliche Schmiermittelpumpen geeignet, die von vornherein dafür ausgelegt sind, in gewissen Zeitabständen kleine Flüssigkeitsmengen in einen Zuführkanal zu fördern. Mit dieser Ausführung würden die mit Flüssigkeit zu beaufschlagenden Flächen ständig benetzt, was an sich ohne besonderen Nachteil ist. Eine andere bevorzugte Ausführungsform sieht vor, daß ein Flüssigkeitsaustritt aus den Zuführkanälen nur dann erfolgt, wenn sich ein Kantholz auf den entsprechenden Flächen befindet. Hierzu können die Austrittskanäle mit einer Einrichtung verbunden sein, die Flüssigkeit unter Druck zur Verfügung stellt, wobei die Mündungen der Austrittskanäle mit Ventilmitteln versehen sind, die sich nur dann öffnen und Flüssigkeit austreten lassen, wenn sich ein Kantholz über ihnen befindet. Dies ist beispielsweise mit gewissen Kugelventilen möglich, deren Ventilkugel über die Austrittsfläche vorsteht und durch ein darübergeführtes Kantholz in den Austrittskanal zurückgedrückt wird, wobei der Flüssigkeitsweg freigegeben wird.

Technisch ist es mit vertretbarem Aufwand nicht zu realisieren, entsprechende Mittel im eigentlichen Messer vorzusehen, weil das Messer ein austauschbares Verschleißelement ist und die Messerfertigung sich unvertretbar verteuern würde, wenn man innerhalb des Messers noch gewisse Flüssigkeitskanäle vorsehen würde. Im direkten Messerbereich erfolgt die Flüssigkeitsbeaufschlagung daher vorzugsweise durch Aufsprühen. Da sich oberhalb des Messers der umlaufende Gummigurt für den Andruck eines Kantholzes befindet, ist ein Aufsprühen direkt von oben aus praktischen Gründen nicht sinnvoll. Es ist daher zweckmäßiger, das Messer von der Seite her mit Flüssigkeit zu besprühen. Da, wie eingangs erwähnt, jedoch tunlichst vermieden werden soll, in Bearbeitung befindliche Kanthölzer auch noch an ihrer Oberseite zusätzlich zu benetzen, erfolgt das Besprühen des Messers in bevorzugter Ausführungsform intermittierend nur zu den Zeitpunkten, zu denen sich gerade kein Kantholz im Messerbereich befindet. Dies läßt sich beispielsweise durch eine Fotozellensteuerung erreichen, die die Gegenwart eines Kantholzes abtastet und über geeignete Steuermittel die Sprüheinrichtung nur dann freigibt, wenn sich eben kein Kantholz im fraglichen Bereich befindet.

Als Benetzungsflüssigkeit wird vorzugsweise Wasser verwendet. Der Einsatz von Wasser gewährleistet in erster Linie, daß das Holz selbst nicht mit Flüssigkeiten in Berührung kommt, die für seine weitere Verarbeitung zu einem hochqualitativen Endprodukt abträglich sein könnten. Wasser hat sich überraschenderweise aber auch noch aus einem anderen Grunde als äußerst vorteilhaft erwiesen.

Gewisse Harthölzer, insbesondere Eiche, Kastanie und Robinie, die zum Teil einen sehr hohen Gerbsäuregehalt haben, neigen dazu, Substanzen abzugeben, die sich auf den Führungsflächen des Auflagetisches ablagern. Insbesondere findet eine solche Ablagerung an dem beim Schneidvorgang warm werdenden Messer statt, weil dort die die Holzsubstanzen enthaltende Flüssigkeit leicht verdampft oder zumindest abtrocknet und die ursprünglich gelösten Substanzen sich ablagern und am Messer antrocknen. Diese Erscheinung ist nicht nur aus dem Gesichtspunkt einer Erhöhung der Reibungswerte von Nachteil, ein nicht mehr glattes Messer führt auch zu verschlechterter Schnittqualität, d.h. verschlechterten Oberflächen der erzeugten Bretter.

Es hat sich nun erstaunlicherweise herausgestellt, daß gerade durch das an sich durch die Verhältnisse vorgegebene intermittierende Besprühen des Messers, und zwar insbesondere mit Wasser, die schädlichen Ablagerungen auf dem Messer leicht beseitigt werden können.

Haben sich solche Ablagerungen erst einmal endgültig festgesetzt, sind sie oft nur unter sehr großem Aufwand mit beispielsweise flüssigen Lösungsmitteln oder durch mechanische Bearbeitung wieder entfernbar. Durch das intermittierende Besprühen des Messers mit Wasser scheinen die Ablagerungen jedoch nicht in diesen resistenten Zustand überzugehen. Denn durch Besprühen des meist heißen Messers in geringen Abständen entsteht offenbar eine Art Schockwirkung auf die in Ablagerung befindlichen Substanzen, so daß diese wieder im Wasser gelöst und mühelos durch das aufgesprühte Wasser selbst bzw. das nächste darübergeführte Kantholz entfernt werden können.

Werden solche problematischen Hölzer verarbeitet, ist es daher in erster Linie sinnvoll, die Messerfläche mit Flüssigkeit, und zwar gerade durch intermittierendes Besprühen mit Wasser, zu beaufschlagen. Für die übrigen Bereiche des Auflagetisches erfolgt die Zufuhr der Flüssigkeit zweckmäßigerweise, wie beschrieben, durch die Tischfläche selbst. Dabei sollte in erster Linie der Zuführtisch mit Flüssigkeit beaufschlagt werden, da hier vor der Messerschneide ein starker Andruck des Kantholzes am wesentlichsten ist. Beim Abführen des Restkantholzes auf dem Messertisch hinter der Messerfläche sind die Verhältnisse nicht mehr derart kritisch.

Werden jedoch übliche Hölzer, wie Fichte und dergl. verarbeitet, die nicht zur Bildung von kritischen Ablagerungen neigen, kann eine Flüssigkeitsbeaufschlagung des Auflagetisches, insbesondere des Zuführtisches, durch die Tischfläche hindurch ausreichend sein, ohne daß ein zusätzliches Besprühen der Messerfläche erforderlich ist.

Durch die erfindungsgemäße Maßnahme lassen sich inbesondere bei der Verarbeitung problematischer Hölzer die Stillstandszeiten der Schneidmaschinen erheblich reduzieren. Der Wasserbedarf für die erfindungsgemäße Maßnahme läßt sich vom Fachmann durch Versuche leicht einstellen und ist insgesamt gering, so daß es besonderer Maßnahmen zur Erfassung und Behandlung von Rückwasser nicht bedarf.

Im folgenden wird die Erfindung anhand der beiliegenden schematischen Zeichnungen noch zusätzlich erläutert.

Es zeigen:
- Fig. 1: einen Schnitt quer zur Förderrichtung eines Kantholzes durch eine Schneidvorrichtung mit einer Sprüheinrichtung und mit Flüssigkeitsaustrittskanälen ,
- Fig. 2: eine Aufsicht auf einen Ausschnitt des Auflagetisches einer Schneidvorrichtung nach Fig. 1.

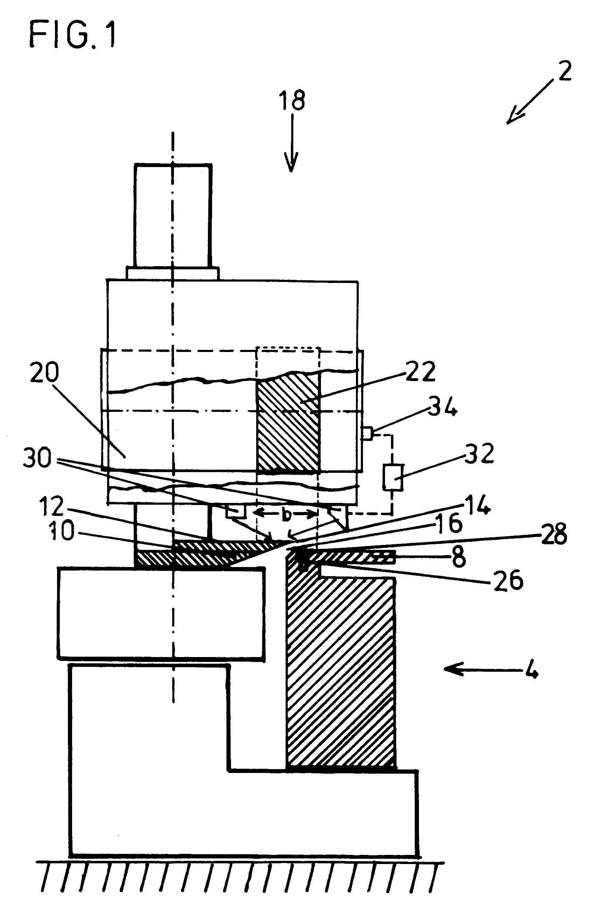

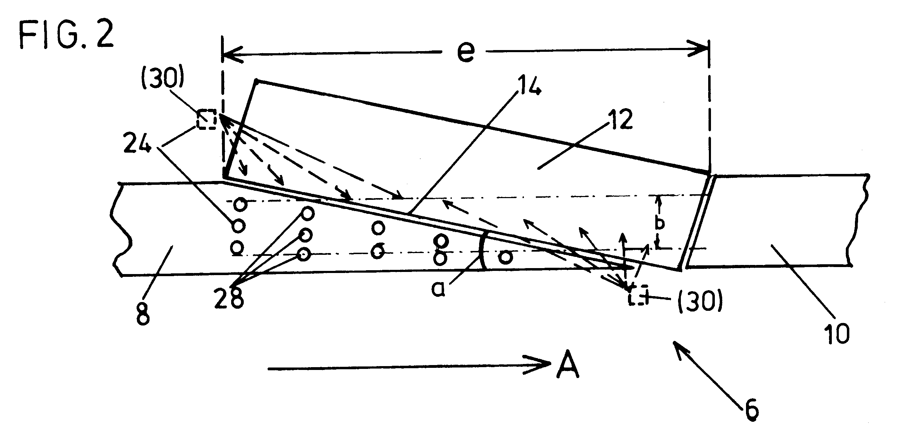

Die in Fig. 1 dargestellte Schneidvorrichtung 2 weist auf einem Unterbau 4 einen horizontal ausgerichteten Auflagetisch 6 auf, auf dem das zu schneidende Kantholz mit seiner Unterseite abgestützt ist. Der Auflagetisch 6 setzt sich aus einem Zuführtisch 8 und einem Messertisch 10 zusammen. Der Zuführtisch 8 ist in Zuführrichtung "A" (siehe Fig. 2) des Kantholzes gesehen vor dem Messertisch 10 angeordnet. In den Messertisch 10 ist an der dem Zuführtisch 8 zugewandten Seite ein Schneidmesser 12 eingesetzt, dessen Schneidkante 14 entgegen der Zuführrichtung "A" ausgerichtet ist. Das Messer 12 ist so im Auflagetisch eingesetzt, daß die Schneidkante 14 in einem spitzen Winkel "a" zur Zuführrichtung "A" verläuft (siehe Fig. 2). Wie aus Fig. 2 besonders deutlich hervorgeht, weisen durch diese Anordnung des Schneidmessers 12 Zuführ- und Messertisch im Bereich des Schneidmessers 12 ab- bzw. zunehmende Breiten auf. Der Zuführtisch 8 wird in Richtung "A" gesehen stetig schmaler und der Messertisch 10 wird breiter durch die Erstreckung des Messers durch die Schneidzone "b" hindurch. Die Schneidzone b ist im Erstreckungsbereich "e" des Schneidmessers 12 in Richtung "A" der Bereich des Auflagetisches 6, in dem das Kantholz in seiner Längsrichtung durch die Schneidvorrichtung hindurchgefördert wird. Die Schneidzone b erstreckt sich damit parallel zum Erstreckungsbereich "e" des Messers 12 über einen Teil der Breite des Auflagetisches 6 und wird vorgegeben durch die Stellung der Vorschub- und der Andruckmittel, die die Lage des Kantholzes in der Schneidvorrichtung 2 vorgeben.

Der Messertisch 10 ist parallel nach oben vom Zuführtisch 8 beabstandet. Dadurch entsteht zwischen der Schneidkante 14 und dem der Kante gegenüberliegenden Ende des Zuführtisches 8 ein Spalt 16, durch den das an der Unterseite des Kantholzes durch die Schneidkante 14 abgetrennte Brett geführt wird.

Oberhalb und beabstandet zum Auflagetisch 6 nimmt ein Überbau 18 die Andruck- und eventuell noch Vorschubmittel auf. Um zwei Umlenkwalzen 20, von denen mindestens eine zur Unterstützung des Vorschubes angetrieben ist, läuft ein Gummigurt 22 um. Zwischen den Umlenkwalzen 20 sind die hier nicht näher dargestellten Andruckmittel als Andruckwalzen ausgebildet. Die Andruckwalzen üben einen senkrecht auf die Oberseite des Kantholzes und damit auf den Auflagetisch 6 wirkenden Druck aus. Vorschub- und Andruckwalzen werden von dem in Richtung "A" umlaufenden Gurt 22 umschlungen, der auf der Oberseite des zu schneidenden Kantholzes aufliegt. Die Breite des Gurtes 22 entspricht im wesentlichen der Breite b der Schneidzone und die Lage des Gurtes 22 bezogen auf den Auflagetisch 6 gibt die Lage der Schneidzone b vor.

Die Schneidvorrichtung wird in der Weise betrieben, daß ein Kantholz in seiner Längsrichtung in Richtung "A" der Schneidvorrichtung zugeführt wird und dabei mit seiner Unterseite auf dem Auflagetisch 6 aufliegt. Der umlaufende Gurt greift auf der Oberseite des Kantholzes an und befördert es in Richtung "A" über den Zuführtisch 8 gegen die Schneidkante 14 des Schneidmessers 12. Das an der Unterseite des Kantholzes durch die Schneidkante 14 abgetrennte dünne Brett wird durch den Spalt 16 abgeführt. Nach Passieren des Schneidmessers 12 liegt das Kantholz mit seiner Unterseite weiter auf dem Messertisch 10 auf und wird durch die Vorschubmittel aus der Schneidvorrichtung herausbewegt. Die im wesentlichen im Bereich des Schneidmessers 12 angeordneten Andruckmittel üben auf die Oberseite des durch die Schneidvorrichtung 2 bewegten Kantholzes Druck aus, so daß das Kantholz im Bereich der Erstreckung des Schneidmessers 12 fest auf dem Auflagetisch 6 aufliegt. Damit wird sichergestellt, daß an der Schneidkante 14 ein Brett gleichmäßiger Dicke abgetrennt wird.

An der Schneidvorrichtung nach Fig. 1 und 2 sind weiter Mittel 24 zum Aufbringen von Flüssigkeit auf den Auflagetisch 6 - und damit auch auf das Messer 12 - angeordnet. Diese Mittel sind einmal als Flüssigkeitsaustrittskanäle 26 ausgebildet, die durch den Zuführtisch 8 verlaufen und deren Austrittsöffnungen 28 in der Oberfläche des Zuführtisches 8, auf der das zu schneidende Kantholz abgestützt ist, münden. Die Kanäle 26 sind an dem den Austrittsöffnungen 28 entgegengesetzten Ende mit einer Flüssigkeitsquelle verbunden. Die Kanäle sind weiterhin mit einer Flüssigkeitsdosiereinrichtung verbunden, die die durch die Austrittsöffnungen abgegebene Flüssigkeitsmenge steuert. Flüsigkeitsquelle und Flüssigkeitsdosiereinrichtung sind in den Figuren nicht näher dargestellt.

Die durch die Austrittsöffnungen 28 austretende Flüssigkeit wird durch das darüber hinweggeführte Kantholz mitgerissen und verteilt.

Weitere Mittel 24 zum Aufbringen von Flüssigkeit sind die Sprüheinrichtungen 30, die am Überbau 18, seitlich des Gurtes 22 und damit oberhalb des Auflagetisches 6 befestigt sind. Die Sprüheinrichtungen 30 sind so ausgerichtet, daß sie die Oberseite des Messers, insbesondere in der Nähe der Schneidkante, möglichst vollständig mit Flüssigkeit benetzen. Die Sprüheinrichtungen 30 sind mit hier nur schematisch dargestellten Steuermitteln 32 verbunden, die die Sprüheinrichtungen 30 intermittierend betätigen. Die Steuermittel 32 betätigen die Sprüheinrichtungen 30 in Abhängigkeit von den Signalen, die durch die mit den Steuermitteln 32 verbundenen Erfassungsmittel 34 an die Steuermittel übermittelt werden. Die Erfassungsmittel 34 sind am Überbau 18 angeordnet und so ausgelegt, daß sie erfassen, ob die Umlenkwalzen 20 mit einem Kantholz in Eingriff stehen, das heißt, ob sich ein Kantholz im Sprühbereich der Sprüheinrichtungen 30 befindet. Durchläuft ein Kantholz die Schneidzone b, wird dieses Signal durch die Erfassungsmittel 34 an die Steuermittel 32 übermittelt. In diesem Fall werden die Sprühvorrichtungen 30 geschlossen und es wird keine Flüssigkeit auf das Schneidmesser 12 aufgebracht. Befindet sich kein Kantholz in der Schneidzone b, ist die Schneidvorrichtung 2 demzufolge im Leerlauf, empfangen die Steuermittel 32 von den Erfassungsmitteln 34 ein dementsprechendes Signal und die Sprüheinrichtungen 30 werden so betätigt, daß sie die Oberfläche des Messers 12 mit Flüssigkeit benetzen.

Als Flüssigkeit zum Besprühen des Auflagetisches 6 - und damit auch des Messers 12 - wird bevorzugt Wasser verwendet.

## Patentansprüche

1. Vorrichtung zum schneidenden Abtrennen dünner Bretter von einem Kantholz mit
- einem Auflagetisch (6) für das Kantholz, welcher in einen Zuführtisch (8) und einen relativ zum Zuführtisch in seiner Höhe verstellbaren Messertisch (10) unterteilt ist, welcher an seiner dem Zuführtisch (8) zugewandten Vorderkante mit einem Schneidmesser (12) versehen ist, sowie mit
- Vorschubmitteln (20) zum Vorschieben des Kantholzes in dessen Längsrichtung über den Auflagetisch (6) gegen die Schneide (14) des Messers (12) und mit
- Andruckmitteln zum Andrücken des Kantholzes gegen den Auflagetisch (6),
dadurch gekennzeichnet, daß Mittel (24) zum Aufbringen von Flüssigkeit auf das Messer (12) und/oder zumindest Teilbereiche des Auflagetisches (6) vorgesehen sind.

2. Vorrichtung nach Anspruch 1, dadurch gekennzeichnet, daß die Mittel (24) zum Aufbringen von Flüssigkeit über dem Messer bzw. dem Auflagetisch angeordnete Sprüheinrichtungen (30) sind.

3. Vorrichtung nach Anspruch 2, dadurch gekennzeichnet, daß die Sprüheinrichtungen (30) gesteuert intermittierend betreibbar sind.

4. Vorrichtung nach Anspruch 3, dadurch gekennzeichnet, daß Erfassungsmittel (34) für die Gegenwart eines Kantholzes im Sprühbereich der Sprüheinrichtungen vorgesehen sind, die ausgebildet sind, über Steuermittel (32) in einer Weise auf die Sprüheinrichtungen (30) einzuwirken, daß diese nur in Einsatz treten, wenn sich kein Kantholz im Sprühbereich befindet.

5. Vorrichtung nach Anspruch 1, dadurch gekennzeichnet, daß die Mittel (24) zum Aufbringen von Flüssigkeit im Auflagetisch, insbesondere im Zuführtisch, vorgesehene Flüssigkeitsaustrittskanäle (26) sind.

6. Vorrichtung nach Anspruch 5, dadurch gekennzeichnet, daß die Flüssigkeitsaustrittskanale (26) mit einer Flüssigkeitsdosiereinrichtung verbunden sind.

7. Vorrichtung nach Anspruch 1 oder 5, dadurch gekennzeichnet, daß die Flüssigkeitsaustrittskanäle mit Mitteln zum Erzeugen einer Flüssigkeit unter Druck verbunden sind und an ihren Austrittsöffnungen mit steuerbaren Ventilmitteln versehen sind.

8. Vorrichtung nach Anspruch 7, dadurch gekennzeichnet, daß die Ventilmittel aus der Fläche des Auflagetisches vorstehende und elastisch in den Auflagetisch zurückdrückbare Ventilteile aufweisen, die ausgebildet sind, bei Zurückdrücken durch ein über den Auflagetisch geführtes Kantholz die Flüssigkeitsaustrittsöffnungen freizugeben.

9. Vorrichtung nach Anspruch 1, dadurch gekennzeichnet, daß für das Aufbringen von Flüssigkeit auf das Messer (12) Sprüheinrichtungen (30) nach mindestens einem der Ansprüche 2-4 und zum Aufbringen von Flüssigkeit auf den Auflagetisch (6), insbesondere den Zuführtisch (8), Flüssigkeitsaustrittskanäle (26) nach mindestens einem der Ansprüche 5-8 vorgesehen sind.

10. Verfahren zum schneidenden Abtrennen eines Brettes mittels einer Vorrichtung nach dem Oberbegriff des Patentanspruches 1, dadurch gekennzeichnet, daß der Auflagetisch (6) und/oder das Messer (12) während des Betriebes mit einer Flüssigkeit beaufschlagt werden.

11. Verfahren nach Anspruch 10, dadurch gekennzeichnet, daß als Flüssigkeit Wasser verwendet wird.

12. Verfahren nach Anspruch 10 oder 11, dadurch gekennzeichnet, daß der Messerbereich mit Flüssigkeit besprüht wird.

13. Verfahren nach Anspruch 12, dadurch gekennzeichnet, daß ein Besprühen im wesentlichen nur dann erfolgt, wenn sich kein Kantholz im Messerbereich befindet.

14. Verfahren nach Anspruch 10 oder 11, dadurch gekennzeichnet, daß der Auflagetisch (6), insbesondere der Zuführtisch (8), über in der Tischfläche angeordnete Flüssigkeitsaustrittsöffnungen (26) mit Flüssigkeit beaufschlagt wird.

15. Verfahren nach Anspruch 14, dadurch gekennzeichnet, daß der Auflagetisch (6) jeweils mit Flüssigkeit beaufschlagt wird, wenn sich ein Kantholz auf dem Tisch (6) befindet.

## Claims

1. Apparatus for slicing thin blanks from squared timber comprising
- a supporting table (6) for the squared timber, subdivided into a feeding table (8) and a knife table (10) the height thereof being adjustable in relation to the feeding table, said knife table being provided at its front edge facing said feeding table (8) with a slicing knife (12), and
- forward feeding means (20) to advance the squared timber along its longitudinal direction across the supporting table (6) against the slicing edge (14) or the knife (12) and
- pressing means to press the squared timber against the supporting table (6),
characterized in that means (24) are provided to distribute liquid upon the knife (12) and/or at least upon a section of the supporting table (6).

2. Apparatus according to claim 1, characterized in that the means (24) to distribute the liquid are sprayers (30) disposed above the knife or, respectively, above the supporting table.

3. Apparatus according to claim 2, characterized in that the sprayers (30), can be operated in a controlled intermitting manner.

4. Apparatus according to claim 3, characterized in that means (34) are provided to recognize the presence of a squared timber in the spray zone of the sprayer, said means being developed such as to act via control means (32) upon the sprayers (30) thus that said sprayers are only operated when no squared timber is present in the spray zone.

5. Apparatus according to claim 1, characterized in that the means (24) to distribute the liquid are liquid exhaust channels (26) provided in the supporting table, in particular in the feeding table.

6. Apparatus according to claim 5, characterized in that the liquid exhaust channels (26) are connected with a dosing feeder for liquids.

7. Apparatus according to claims 1 or 5, characterized in that the liquid exhaust channels are connected with means to form a liquid under pressure and are provided at their outlets with controllable valve means.

8. Apparatus according to claim 7, characterized in that the valve means comprise valve elements protruding from the surface or the supporting table which can be elastically pressed back into the supporting table, said valve elements being developed such as to release the liquid outlets when they are pressed back by a squared timber conducted across the supporting table.

9. Apparatus according to claim 1, characterized in that sprayers (30) according to at least one of claims 2 to 4 are provided to distribute the liquid upon the knife (12) and in that liquid exhaust channels (26) according to at least one of claims 5 to 8 are provided to distribute liquid upon the supporting table (6), in particular upon the feeding table (8).

10. A process for slicing a plank by means of a device according to the preamble of claim 1, characterized in that, in operation, liquid is admitted to the supporting table (6) and/or to the knife (12).

11. The process according to claim 10, characterized in that water is utilized as the liquid.

12. The process according to claims 10 or 11, characterized in that the knife area is sprayed with liquid.

13. The process according to claim 12, characterized in that spraying is only executed when no squared timber is present in the area of the knife.

14. The process according to claims 10 or 11, characterized in that liquid is admitted to the supporting table (6), in particular to the feeding table (8) via liquid outlets (26) disposed in the surface of the table.

15. The process according to claim 14, characterized in that liquid is admitted to the supporting table (6) when a squared timber is present on the table (6).

## Revendications

1. Dispositif destiné à découper des planches minces par tranchage à partir d'un bois équarri muni
- d'une table porte-pièce (6) destinée au bois équarri, laquelle est subdivisée en une table d'alimentation (8) et en une table porte-couteau (10) réglable en hauteur par rapport à la table d'alimentation, ladite table porte-couteau (10) étant munie d'une lame de coupe (12) au niveau de son bord avant tourné vers la table d'alimentation (8), ainsi que
- de moyens d'avance (20) destinés à avancer le bois équarri suivant sa direction longitudinale sur la table porte-pièce (6) contre le tranchant (14) du couteau (12) et
- de moyens de pression pour appuyer le bois équarri contre la table porte-pièce (6),
caractérisé en ce que sont prévus des moyens (24) destinés à introduire du liquide sur le couteau (12) et/ou au moins sur des régions partielles de la table porte-pièce (6).

2. Dispositif selon la revendication 1, caractérisé en ce que les moyens (24) destinés à l'introduction de liquide sont des mécanismes de pulvérisation (30) disposés au-dessus du couteau respectivement sur la table porte-pièce.

3. Dispositif selon la revendication 2, caractérisé en ce que les mécanismes de pulvérisation (30) peuvent fonctionner par intermittence.

4. Dispositif selon la revendication 3, caractérisé en ce que sont prévus des moyens de détection (34) destinés à la présence d'un bois équarri dans la région de pulvérisation des mécanismes de pulvérisation, qui sont développés pour exercer une influence sur les mécanismes de pulvérisation (30) par l'intermédiaire des moyens de commande (32) de manière que ceux-ci ne fonctionnent que lorsque aucun bois équarri ne se trouve dans la région de pulvérisation.

5. Dispositif selon la revendication 1, caractérisé en ce que les moyens (24) pour l'introduction de liquide sont des conduits de sortie de liquide (26) prévus dans la table porte-pièce, en particulier dans la table d'alimentation.

6. Dispositif selon la revendication 5, caractérisé en ce que les conduits de sortie de liquide (26) sont reliés à un dispositif de dosage de liquide.

7. Dispositif selon la revendication 1 ou la revendication 5, caractérisé en ce que les conduits de sortie de liquide sont reliés à des moyens pour produire un liquide sous pression et sont munis de moyens formant vannes qui peuvent être pilotés au niveau de leurs orifices de sortie.

8. Dispositif selon la revendication 7, caractérisé en ce que les moyens formant vannes comportent une partie de vanne dépassant du plan de la table porte-pièce et qui peut être élastiquement enfoncée dans la table porte-pièce et sont développés pour libérer les orifices de sortie de liquide lors d'un enfoncement par un bois équarri amené sur la table porte-pièce.

9. Dispositif selon la revendication 1, caractérisé en ce que pour l'introduction de liquide sur le couteau (12) il est prévu des mécanismes de pulvérisation (30) selon au moins une des revendications 2 à 4, et pour l'introduction de liquide sur la table porte-pièce (6) en particulier sur la table d'alimentation (8), il est prévu des conduits de sortie de liquide (26) selon au moins une des revendications 5 à 8.

10. Procédé destiné à la découpe d'une planche par tranchage au moyen d'un dispositif selon le préambule de la revendication 1, caractérisé en ce que la table porte-pièce (6) et/ou le couteau (12) sont alimentés par un liquide pendant le fonctionnement.

11. Procédé selon la revendication 10, caractérisé en ce que comme liquide on utilise de l'eau.

12. Procédé selon la revendication 10 ou la revendication 11, caractérisé en ce que la région du couteau est aspergée de liquide.

13. Procédé selon la revendication 12, caractérisé en ce qu'une pulvérisation n'a lieu en général que lorsqu'aucun bois équarri ne se trouve dans la région du couteau.

14. Procédé selon la revendication 10 ou la revendication 11, caractérisé en ce que la table porte-pièce (6) en particulier la table d'alimentation (8) est alimentée en liquide par des orifices de sortie de liquide (26) disposés dans la surface de la table.

15. Procédé selon la revendication 14, caractérisé en ce que la table porte-pièce (6) est chaque fois alimentée par un liquide, lorsqu'un bois équarri se trouve sur la table (6).
